(19) Europäisches Patentamt
European Patent Office
Office européen des brevets

(11) **EP 2 058 179 B1**

(12) **EUROPÄISCHE PATENTSCHRIFT**

(45) Veröffentlichungstag und Bekanntmachung des Hinweises auf die Patenterteilung:
**21.02.2018   Patentblatt 2018/08**

(51) Int Cl.:
***B60R 21/0136*** *(2006.01)*

(21) Anmeldenummer: **08105383.7**

(22) Anmeldetag: **19.09.2008**

(54) **VERFAHREN UND STEUERGERÄT ZUR ANSTEUERUNG VON PERSONENSCHUTZMITTELN BEI EINEM SEITENAUFPRALL FÜR EIN FAHRZEUG**

CONTROL DEVICE AND METHOD FOR CONTROLLING PERSONAL SAFETY DEVICES FOR SIDE IMPACT OF A VEHICLE

PROCÉDÉ ET APPAREIL DE COMMANDE DESTINÉS À LA COMMANDE DE MOYENS DE PROTECTION DE PERSONNES LORS D'UNE COLLISION LATÉRALE POUR UN VÉHICULE

(84) Benannte Vertragsstaaten:
**DE ES FR GB**

(30) Priorität: **11.10.2007   DE 102007048884**

(43) Veröffentlichungstag der Anmeldung:
**13.05.2009   Patentblatt 2009/20**

(73) Patentinhaber: **Robert Bosch GmbH**
**70442 Stuttgart (DE)**

(72) Erfinder:
• **Reckziegel, Bastian**
**73230 Kirchheim/Nabern (DE)**
• **Lang, Gunther**
**70563 Stuttgart (DE)**

(56) Entgegenhaltungen:
EP-A1- 0 982 199          WO-A1-02/058968
WO-A1-2005/073735    DE-A1- 19 848 997
US-A1- 2003 023 360    US-A1- 2006 231 321

## Beschreibung

Stand der Technik

Die Erfindung betrifft ein Verfahren bzw. ein Steuergerät zur Ansteuerung von Personenschutzmitteln bei einem Seitenaufprall für ein Fahrzeug nach der Gattung der unabhängigen Patentansprüche.

Aus US 6,095,553 ist es bereits bekannt zur Erkennung eines Pfahlcrashes und eines Barrierencrashes bei einem Seitenaufprall unterschiedliche Sensoriken zu verwenden. Aus der WO 02/058968 ist ein Verfahren zur Seiteaufprallsensierung in einem Fahrzeug bekannt, das dazu dient, einem Seitenaufprall anhand von Beschleunigungssignalen zu erkennen, wobei die Beschleunigungssignale von der linken und der rechten Fahrzeugseite voneinander abgezogen werden, um diese dann zu integrieren bzw. aufzusummieren und in Abhängigkeit von diesem Differenzbeschleunigungssignal die Auslöseschwelle zu bilden.

Offenbarung der Erfindung

Das erfindungsgemäße Verfahren bzw. das erfindungsgemäße Steuergerät zur Ansteuerung von Personenschutzmitteln bei einem Seitenaufprall für ein Fahrzeug mit den Merkmalen der unabhängigen Patentansprüche haben demgegenüber den Vorteil, dass nicht ein unterschiedlicher Sensortyp aber unterschiedliche Sensoren an unterschiedlichen Orten verwendet werden. Damit kann durch eine geschickte Auswertung von Differenzen der Signale der unterschiedlichen Sensoren der Crashtyp zuverlässig bestimmt werden. Die zuverlässige Crashtypbestimmung ermöglicht dann eine präzisere und bessere Ansteuerung der Personenschutzmittel, insbesondere wird auch eine Fehlauslösung vermieden.

Durch die Möglichkeit der Verwendung von unterschiedlich eingebauten Sensoren, können Sensoren gleichen Typs verwendet werden und damit eine Kosten- und Aufwandsersparung gegenüber Sensoren unterschiedlichen Typs erreicht werden. Eine Standardsensorkonfiguration mit einer crashzugewandten, einer crashabgewandten und einer zentralen Sensorik genügt beispielhaft für die Umsetzung des erfindungsgemäßen Steuergeräts.

Der Erfindung liegt der Gedanke zugrunde, dass der Sensor, der bei einem Pfahlcrash dem Kollisionspunkt am Fahrzeug am nächsten ist, das größte Signal erzeugt. Ein Differenzsignal zwischen dem Signal dieses Sensors und einem anderen Signal eines an einem anderen eingebauten Sensors im Fahrzeug ist bei einem Pfahlcrash aufgrund der lokalen Intrusion hoch. Bei einem Barrierencrash fällt diese Differenz bedingt durch den flächigen Kontakt kleiner aus. Die Größe der Differenz sagt aus, ob es sich um ein Pfahlcrash handelt oder nicht. Dafür ist beispielsweise die Größe dieser Differenz entscheidend. Damit können zuverlässig Pfahlcrashes von Barrierencrashes unterschieden werden und somit eine Crashtypbestimmung bei einem Seitenaufprall zuverlässig erfolgen.

Das Ansteuern von Personenschutzmitteln, wie Airbags, Gurtstraffern, Sitzkomponenten, aber auch aktiven Personenschutzmitteln, wie Bremsen oder eine Fahrdynamikregelung, bedeutet das Aktivieren dieser Personenschutzmittel. Ein Seitenaufprall bedeutet, dass ein Aufprallobjekt auf die Seite des Objekts einschlägt. Dieses Aufprallobjekt kann beispielsweise ein Fahrzeug oder ein feststehender Gegenstand sein.

Der Crashtyp bezeichnet eine Klassifizierung des Seitenaufpralls nach seiner Art. Vorliegend wird insbesondere der Pfahlcrash von dem Barrierencrash unterschieden. Der Pfahlcrash ist beispielsweise der Seitenaufprall auf ein Pfosten oder einen Baum, währen der Barrierencrash ein Aufprall gegen eine Wand sein kann. Die Sensoren, beispielsweise Beschleunigungssensoren oder Körperschallsensoren oder andere Aufprallsensoren, sind an unterschiedlichen Orten im Fahrzeug eingebaut, beispielsweise an der A-Säule, an der B-Säule, an der C-Säule oder am Türschweller und/oder am Fahrzeugtunnel sowie auf der gegenüberliegenden Fahrzeugseite an ähnlichen Einbauorten.

Als Signal wird das Signal bezeichnet, das der Sensor infolge des Aufpralls erzeugt. Dies kann ein gefiltertes Signal, das ursprüngliche Rohsignal oder ein weiteres verarbeitetes Signal, wie beispielsweise in integriertes Signal sein. Darunter fällt natürlich auch ein digitalisiertes Signal.

Als Differenz kann eine normal Subtraktion unabhängig vom Vorzeichen, sowie eine Bewertung durch andere Signale der Differenz verstanden werden. Dies bezeichnet beispielsweise eine Differenz, die durch die Summe der Signale geteilt wird. Üblicherweise werden immer nur zwei Signale durch die Differenzbildung miteinander verglichen.

Unter einem Steuergerät ist vorliegend ein elektrisches Gerät zu verstehen, das Sensorsignale verarbeitet und infolge dessen Ansteuersignale für die Personenschutzmittel erzeugt.

Eine Schnittstelle kann hard- und/oder softwaremäßig ausgeführt sein, insbesondere kann sich die Schnittstelle auch als Softwareschnittstelle auf einem Mikrocontroller oder einem anderen Prozessor befinden. Es ist möglich, dass die Hardwarelösung integrierte Schaltkreise und/oder diskrete Bauelemente enthält. Die Schnittstelle kann auch Teil eines größeren ICs sein. Dieser IC weist dann noch weitere Funktionen außer den Schnittstellenfunktionen auf.

Die Auswerteschaltung kann einen Prozessor, wie einen Mikrocontroller, oder ein Asic oder eine Kombination aus integrierten und diskreten Bauelementen sein. Die Auswerteschaltung kann auch auf einem Mehrkernrechner ein Teil dieses Mehrkernrechners sein.

Das Crashtypbestimmungsmodul kann hard- und/oder softwaremäßig ausgeführt sein, beispielsweise als ein Softwaremodul auf dem Mikrocontroller. Es ist jedoch möglich, dass es beispielsweise auf einem integrierten Schaltkreis einen eigenen Schaltungsabschnitt gibt, der an einer Crashtypbestimmung zugeordnet ist und so als Crashtypbestimmungsmodul zu verstehen ist. Dies gilt auch für das Ansteuerungsmodul entsprechend. Ebenso kann das Modul auf mehreren Bausteinen verteilt sein.

Ein Differenzglied ist beispielsweise ein einfacher Subtrahierer und kann entsprechend der Ausführung des Crashtypbestimmungsmoduls hard- und/oder softwaremäßig ausgeführt sein.

Durch die in den abhängigen Ansprüchen aufgeführten Maßnahmen und Weiterbildungen sind vorteilhafte Verbesserungen des in den unabhängigen Patentansprüchen angegebenen Verfahrens- bzw. Steuergeräts zur Ansteuerung von Personenschutzmitteln bei einem Seitenaufprall für ein Fahrzeug möglich.

Es ist vorteilhaft, dass die wenigstens eine Differenz signalverarbeitet wird und die wenigstens eine signalverarbeitete Differenz einem Schwellwertvergleich unterzogen wird, wobei der Crashtyp in Abhängigkeit von dem Schwellwertvergleich bestimmt wird, wobei bei einem Überschreiten des Schwellwertes auf einem Pfahlcrash und bei einem Unterschreiten auf einem Barrierencrash erkannt wird. Hierbei wird daher nämlich nicht nur die Differenz als solche der Signale der unterschiedlich eingebauten Sensoren verwendet, sondern diese Differenz noch weiter signalverarbeitet, um beispielsweise eine Glättung zu erreichen und damit zuverlässigere Signale zu erzeugen. Die Signalverarbeitung ist dabei entsprechend dem Crashtypbestimmungsmodul hard- und/oder softwaremäßig ausgebildet. Ebenso der Schwellwertvergleicher, dessen Schwellwert erfindungsgemäß so eingestellt ist, dass er durch einen Barrierencrash gerade nicht zu erreichen ist. Nur ein Pfahlcrash kann diesen Schwellwert überschreiten.

Es ist weiterhin vorteilhaft, dass als Signalverarbeitung eine Integration und/oder eine Relation verwendet wird. Dabei ist der Integrator und/oder Glied zur Relationsbildung hard- und/oder softwaremäßig entsprechend dem Crashtypbestimmungsmodul ausgebildet. Das Integrieren führt insbesondere zu einer Signalglättung und damit zu einer Verbesserung der Crashtypbestimmung. Die Differenz kann dabei einer Integralbildung oder einer Fensterintegralbildung zugeführt werden. Auch andere Kombinationen sind möglich. Durch die Integration wird zum Einen eine Mittelung oder Glättung erreicht, und zum Anderen bleiben die Differenzen in der früheren Crashphase, die beim Pfahlcrash relativ groß sind, im Gedächtnis des Integrals bestehen. Die Relationsbildung kann dadurch vorgesehen sein, dass die Differenz in der Relation zum stärkeren der beiden Signale oder zur Summe der Signale, beispielsweise betrachtet wird. Auch dieses Kriterium kann einem Schwellwertentscheider zugeführt werden, wobei der Schwellwert wiederum so zu legen ist, dass er von einer flächigen, also einer Deformation, also einem Barrierencrash nicht erreicht wird.

Darüber hinaus ist es vorteilhaft, dass das jeweilige maximale Signal mit allen anderen Signalen Differenzen bildet, da das maximale Signal das Signal ist, das am nächsten zu einem möglichen Pfahlcrash liegt. Dafür kann ein hardware- und/oder softwaremäßig ausgebildeter Maximumsucher im Crashtypbestimmungsmodul vorgesehen sein. Der Maximumsucher findet das maximale Signal, beispielsweise durch Differenzbildung, wobei dann das wenigstens eine Differenzglied, Differenzen des jeweiligen maximalen Signals mit den anderen Signalen bildet. Diese Differenzen werden dann weiter zur Crashtypbestimmung untersucht.

Es ist weiterhin vorteilhaft, dass in Abhängigkeit vom Crashtyp wenigstens eine Auslöseschwelle eines Seitenaufprallalgorithmus verändert wird. Damit nimmt die Bestimmung des Crashtyps, die mit Signalen durchgeführt wird ohne das beispielsweise dieses Signal eine Auslöseschwelle überschreiten muss, eine entscheidende Bedeutung für den Auslösezeitpunkt von Personenschutzmitteln zu. Es ist darüber hinaus oder anstatt möglich, dass der Crashtyp Einfluss nimmt auf die Anzahl und/oder die Stärke der Personenschutzmittel, die angesteuert werden sollen.

Ausführungsbeispiele der der Erfindung sind in der Zeichnung dargestellt und werden in der nachfolgenden Beschreibung näher erläutert.

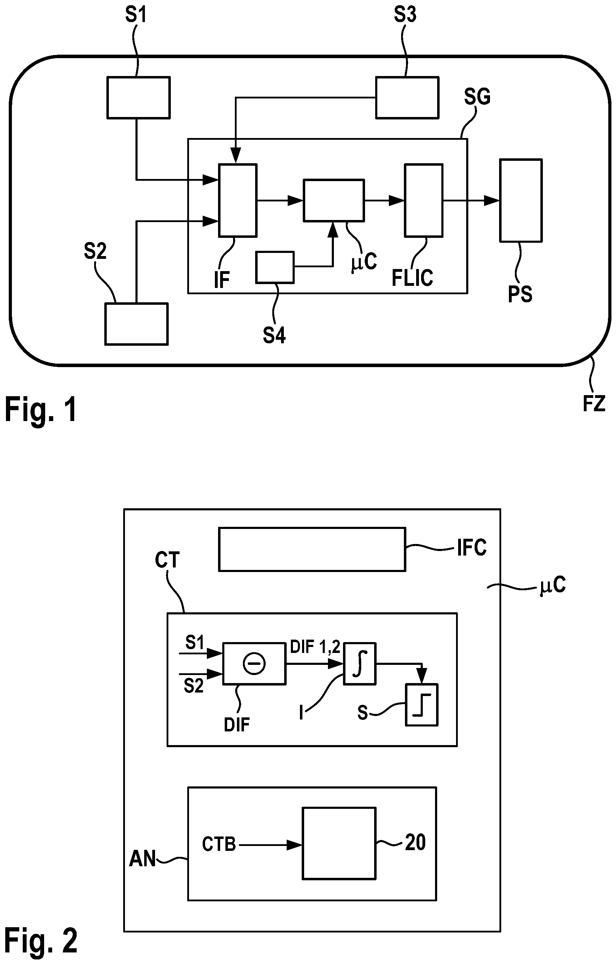

Es zeigen Figur 1
ein Blockschaltbild mit dem erfindungsgemäßen Steuergerät,

Figur 2
eine Softwarestruktur auf dem Mikrocontroller,

Figur 3
ein Blockschaltbild,

Figur 4
ein Pfahlcrash,

Figur 5
einen flächigen Deformations- oder Barrierencrash,

Figur 6
typische Signalverläufe bei einem Pfahlcrash,

Figur 7
typische Signalverläufe bei einem Barrierencrash,

Figur 8
Signalverläufe eines signalverarbeiteten Signals bei einem Pfahlcrash,

Figur 9
die Signalverläufe der signalverarbeiteten Signale bei einem Barrierencrash und

Figur 10

ein Flussdiagramm des erfindungsgemäßen Verfahrens.

Figur 1 erläutert in einem Blockschaltbild in einem Fahrzeug FZ eine typische Konfiguration zur Realisierung der Erfindung. Ein Steuergerät SG zur Ansteuerung von Personenschutzmitteln PS ist mit diesen verbunden, um diese Personenschutzmittel PS im Falle eines Seitenaufpralls anzusteuern. Zu solchen Personenschutzmitteln PS bei einem Seitenaufprall gehören Seitenairbags, die beispielsweise am Fahrzeugsitz angeordnet sind, aber auch sogenannten Curtainairbags, die ein Aufschlagen des Kopfs auf die Fensterscheibe der Seitentüre abmildern. Auch Sitzkomponenten können vorliegend angesteuert werden, ebenso ein Gurtstraffer. Das Steuergerät SG erhält von den Sensoren S1 bis S4 Signale, die der Mirkocontroller μC als der Auswerteschaltung verarbeitet. Die Sensoren S1 bis S4 sind vorwiegend Beschleunigungssensoren. Alternativ ist es möglich, Körperschallsensoren und/oder Luftdrucksensoren zu verwenden, wobei dann die Signale entsprechend umgerechnet werden müssen, um die für die erfindungsgemäße Differenzbildung geeignet zu sein.

Beispielhaft sind hier die Sensoren S1 und S3 an einer Fahrzeugseite und der Sensor S2 auf der anderen Fahrzeugseite, sowie der Sensor S4 im Steuergerät angeordnet. Über Zweidrahtleitungen sind die Sensoren S1 bis S3 mit dem Schnittstellenbaustein IF im Steuergerät SG verbunden. Die Sensoren S1 bis S3 übertragen ihre Daten nach Inbetriebnahme an diese Schnittstelle IF. Es ist möglich, die Sensoren S1 bis S3 in einem Quasibus oder einem Bus zusammenzuschalten. Die Sensoren S1 bis S4 als Beschleunigungssensoren weisen einen mikromechanisch hergestelltes Sensorelement auf, das für Beschleunigungen empfindlich ist, beispielsweise als Fingerstruktur oder als Membran und sich in Abhängigkeit davon bewegt und so elektrisch erfassbare Parameter, wie eine Kapazität verändert und damit ein Sensorsignal erzeugt.

Die Schnittstelle IF sorgt für eine Übertragung dieser Signale an den Mikrocontroller μC beispielsweise über den sogenannten SPI (Serial Peripher Interfacebus), so dass der Mikrocontroller μC diese Signale in einfacher Art und Weise verarbeiten kann. Dafür weist der Mikrocontroller μC Speicher und Rechenwerk auf, er kann beispielsweise auch als Mehrrechnerkern ausgebildet sein. Der Sensor S4 ist direkt an dem Mikrocontroller μC, beispielsweise an einen analogen Digitaleingang angeschlossen. Dafür weist der Mikrocontroller μC dann eine Softwareschnittstelle auf, um dieses Signal des Sensors S4 für die weitere Verarbeitung bereitzustellen.

Die weitere Verarbeitung geschieht dann erfindungsgemäß, indem der Crashtyp durch die entsprechende Differenzbildung bestimmt wird. Diese Crashtypbestimmung nimmt dann Einfluss, beispielsweise auf die Auslöseschwellen im Seitenaufprallalgorithmus. Werden diese veränderten Auslöseschwellen überschritten, dann kommt es zur Ansteuerung der Personenschutzmittel PS über ein Ansteuerungssignal, das ebenfalls über den SPI-Bus an die Ansteuerschaltung FLIC übertragen wird, die elektrisch steuerbare Leistungsschalter aufweist, die im Falle eines Ansteuerungsfalls geschlossen werden. Dieses Schließen führt dann zum Bestromen der Zündelemente oder der elektromagnetischen Aktuatorik der Personenschutzmittel PS.

Die Crashtypbestimmung kann auch auf Anzahl und Stärke der Personenschutzmittel PS Einfluss nehmen.

Figur 2 zeigt in einer schematischen Darstellung eine Softwarestruktur des Mikrocontrollers μC, wie sie für das Verständnis der Erfindung ausreichend ist. D. h. es kann noch weitere Softwaremodule für den Betrieb des Mirkocontrollers μC geben. Dies gilt ebenso für die Blockschaltbilder gemäß Figur 1, wo auch nur das für die Erfindung notwendige dargestellt wurde.

Der Mikrocontroller μC weist eine Softwareschnittstelle IFC auf, die zur Bereitstellung des Signals des Sensors S4 vorgesehen ist. Weiterhin weist der Mikrocontroller μC ein Crashtypbestimmungsmodul CT auf, das ein Differenzglied DIF auf das die Signale, beispielsweise S1 von S2 subtrahiert und so das Differenzsignal DIF 1,2 bildet. Dieses Signal kann durch den Integrator I signalverarbeitet werden, um dann einem Schwellwertentscheider zugeführt zu werden. Dadurch kann der Crashtyp bestimmt werden.

Weiterhin ist ein Ansteuerungsmodul vorgesehen, bei dem der Crashtyp CTB auf den Seitenaufprallalgorithmus 20 Einfluss nimmt. In den Seitenaufprallalgorithmus gehen ebenfalls die Sensorsignale der Sensoren S1 bis S4 ein, um zu bestimmen, ob die Personenschutzmittel PS anzusteuern sind oder nicht.

Zur Auswertung wird eine mögliche Differenz der Signale der Sensoren S1 bis S4 herangezogen, dabei kann es sich direkt um die gemessenen Beschleunigungssignale oder aber um bereits vorverarbeitete Signale handeln, wie beispielsweise tiefpassgefilterte Beschleunigungssignale, Fensterintegrale des Beschleunigungssignals, das zweite Integral des Beschleunigungssignals, d. h die Deformation am Sensorort.

Damit ergeben sich die folgenden möglichen Differenzen der direkten oder vorverarbeiteten Signale:

Falls ein Pfahlcrash am Sensor S1 starke Signale liefert:

$$Differenz = S1 - S2$$

$$Differenz = S1 - S3$$

$$Differenz = S1 - S4$$

Wobei nunmehr die Sensorbezeichnungen als Signalbezeichnung verwendet werden.

Falls ein Pfahlcrash am Sensor 4 starke Signale liefert, beispielsweise ein Pfahl hinten:

$$\text{Differenz} = S4 - S1$$

$$\text{Differenz} = S4 - S2$$

$$\text{Differenz} = S4 - S3$$

Zur Trennung von lokalen und flächigen Deformationen kann nun diese Differenz

a) entweder direkt genutzt werden und mit einem Schwellwert verglichen werden:

Bei Schwellwertüberschreitung handelt es sich um ein Pfahlcrash, ansonsten um ein Barrierencrash. Der Schwellwert kann dabei fest sein oder in Abhängigkeit von weiteren Variablen verändert werden.

b) Eine Verbesserung der Klassifikation kann durch eine weitere Signalverarbeitung der Differenz geschehen. Die Differenz kann sowohl einem Integral als auch einem Fensterintegral zugeführt werden, also beispielsweise im ersten Fall

$$\text{IntDiff} = \text{Int} (S1 - S2)$$

Oder die entsprechenden anderen Kombinationen. Durch die Integration wird zum Einen eine Mittelung oder Glättung erreicht, zum Anderen bleiben die Differenzen in der frühen Crashphase, die beim Pfahlcrash relativ groß sind, im Gedächtnis des Integrals stehen.

Die Größe IntDiff ist anschaulich die Fläche, welche zwischen den Zeitkurven der Signale S1 und S2 liegt. In einer besonders vorteilhaften Realisierung kann diese zur Differenzierung herangezogene Fläche zusätzlich noch durch eine Abbruchschwelle begrenzt werden. Damit wird zum einen die Crashtyperkennung auf die frühe Crashphase begrenzt, zum anderen werden unerwünschte Signaleffekte die im späteren Crashverlauf auftreten, beispielsweise ein Wegdrehen oder Abriss des Sensors ausgeblendet.

Das schlussendliche Kriterium kann nun mit einer Schwelle verglichen werden, wobei der Schwellwert so zu legen ist, dass er von einer flächigen Deformation, also einem Barrierencrash nicht erreicht wird.

c) Eine weitere Möglichkeit besteht darin, die oben beschriebene Differenz der direkten bzw. vorverarbeiteten Signale S1 bis S4 in Relation zum Stärkeren der beiden Signale oder zur Summe der Signale zu betrachten, beispielsweise

$$\text{Diff} = (S1 - S2) / \max (S1; S2)$$

oder

$$\text{NormDiff} = (S1 - S2) / (S1 + S2)$$

Auf dieses kann nun gegen eine Schwelle verglichen werden, wobei der Schwellwert so zu legen ist, dass er von der flächigen Deformation nicht erreicht wird.

Die so ermittelte Information über den Crashtyp kann dann dazu verwendet werden, die Auslöseschwellen des Seitenaufprallalgorithmus auf den jeweiligen Crashtyp zu optimieren. Des Weiteren kann die Crashtypinformation verwendet werden, um einzelne Rückhaltemittel gezielt nur bei bestimmten Crashtypen anzusteuern.

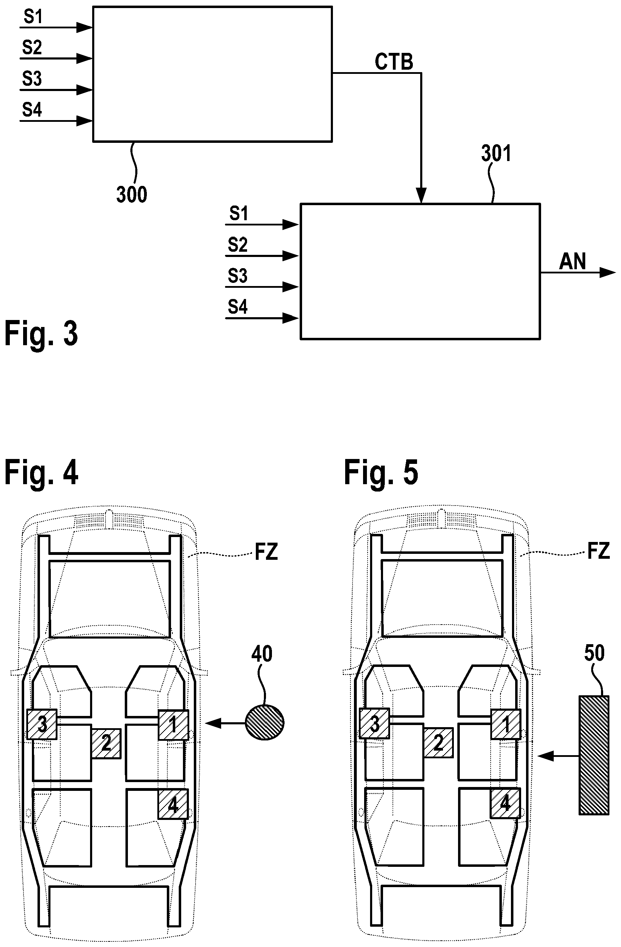

Figur 3 zeigt in einem Blockschaltbild den Ablauf des Gesamtsystems. Die Signale S1 bis S4 werden im Block 300 in der erfindungsgemäßen Art und Weise durch Differenzbildung verarbeitet, um den Crashtyp zu bestimmen. Dieser Crashtyp CTB wird dem Block 301 zugeführt, indem der Seitenaufprallalgorithmus gerechnet wird. Auch in diesem Seitenaufprallalgorithmus werden die Signale S1 bis S4 eingespeist, wobei auch noch weitere Signale von anderen nicht dargestellten Sensoren eingespeist werden können. Der Seitenaufprallalgorithmus rechnet beispielsweise die Integrale im Vergleich zu adaptiv ausgeführten Schwellen, wobei bei einem entsprechenden Überschreiten der Schwellen ein Ansteuersignal AN erzeugt wird, um die Personenschutzmittel anzusteuern.

Figur 4 zeigt einen Pfahlcrash bei einem Fahrzeug FZ, wobei der Pfahl 40 in die Nähe des Einbauorts 1 des ersten Sensors treffen wird. Die anderen Einbauorte 2, 3 und 4 sind weiter entfernt, so dass der Sensoreinbauort 1 das maximale Signal liefern wird und Differenzen dann zu den anderen Sensorsignalen gebildet werden.

Figur 5 zeigt dagegen ein Barrierencrash mit der Barriere 50, die flächig gegen die Seite treffen wird, wobei wiederum die gleichen Einbauorte 1 bis 4 dargestellt sind, im Fahrzeug FZ.

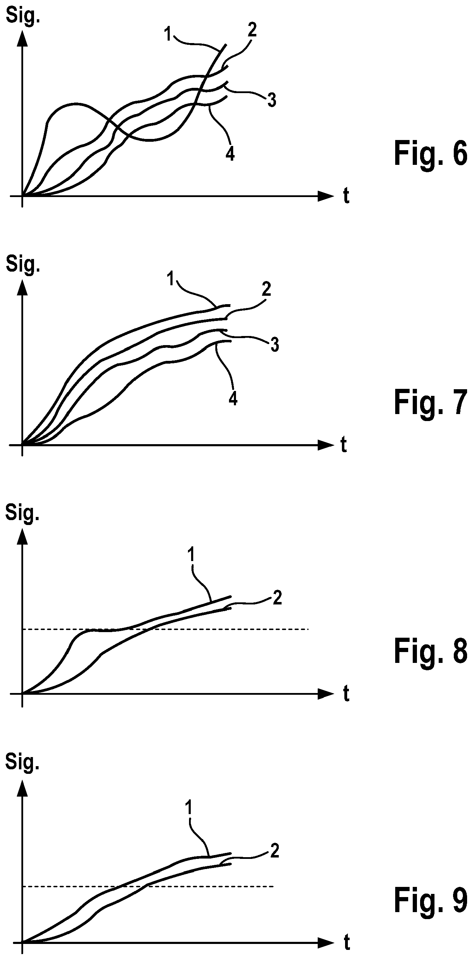

Figur 6 zeigt einen Signalverlauf bei einem Pfahlcrash. Die Kurve 1, die zunächst ein Maximum und dann ein Minimum durchschreitet, um dann weiter anzusteigen, ist das Signal das am nächsten zum Aufprallpunkt des Pfahls erzeugt wurde. Die anderen Signale 2, 3 und 4 der anderen Sensoren, zeigen mehr oder weniger ein ähnliches aber vom Signal 1 total abweichendes Verhalten und sind leicht in der Amplitude unterschiedlich. Daher wird eine Differenzbildung zum Signal 1 den Pfahlcrash indizieren.

Figur 7 zeigt dagegen die Signalverläufe in Abhängigkeit von der Zeit bei einem Barrierencrash entsprechend den Einbauorten 1 bis 4 aus den Figuren 4 und 5. Deutlich ist zu erkennen, dass die Signale einen ähnlichen Zeitverlauf aufweisen und sich nur leicht in der Amplitude unterscheiden, so dass eine Differenzbildung eindeutig angeben wird, dass es sich um einen flächigen Deformationscrash gemäß Figur 7 handelt.

Figur 8 zeigt die integrierten Sensorsignale 1 und 2 bei einem Pfahlcrash. Gestrichelt ist die sogenannte Abbruchschwelle eingezeichnet, um nur die Differenz der Integrale bis zu dieser Schwelle, also damit in der frühen Crashphase auszuwerten, um den Pfahlcrash zu identifizieren. Entsprechend zeigt Figur 9 die integrierten Signale der Sensoren 1 und 2 bei einem Barrierencrash und wiederum gestrichelt die Abbruchschwelle.

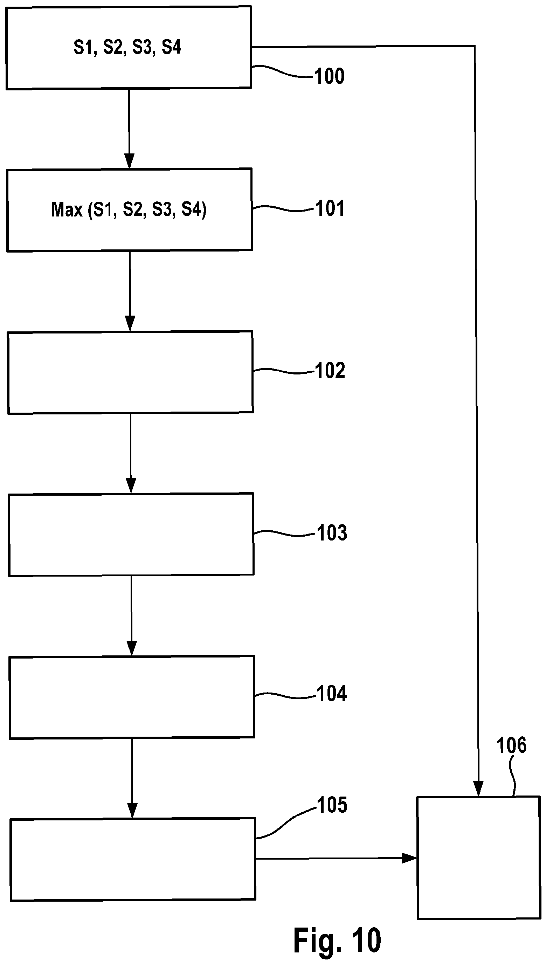

Figur 10 zeigt in einem Flussdiagramm das erfindungsgemäße Verfahren. Im Verfahrensschritt 100 werden die Signale der Sensoren S1, S2, S3 und S4 bereitgestellt. Verfahrensschritt 101 wird beispielsweise durch den Maximumsucher das Maximum der Sensorsignale gesucht. Verfahrensschritt 102 wird mit dem Maximum dann eine Differenzbildung mit den anderen Sensorsignalen durchgeführt. Die Differenzen werden im Verfahrensschritt 103 signalverarbeitet, beispielsweise integriert. Die Differenzen werden dann in Verfahrensschritt 104 einer Schwellwertprüfung zugeführt. In Abhängigkeit von dieser Schwellwertprüfung wird im Verfahrensschritt 105 der Crashtyp bestimmt. Dieser Crashtyp beeinflusst den Seitenalgorithmus 106, in denen auch die Signale S1 bis S4 eingehen.

**Patentansprüche**

1. Verfahren zur Ansteuerung von Personenschutzmitteln (PS) bei einem Seitenaufprall für ein Fahrzeug (FZ), wobei die Ansteuerung in Abhängigkeit von einer Crashtypbestimmung erfolgt, wobei der Crashtyp mittels wenigstens zweier Signale (S1 bis S4) von unterschiedlich eingebauten Sensoren (S1 bis S4) bestimmt wird, wobei die Bestimmung in Abhängigkeit von wenigstens einer Differenz der wenigstens zwei Signale (S1, S2) erfolgt **dadurch gekennzeichnet, dass** ein maximales Signal mittels eines Maximumsuchers bestimmt wird und wenigstens ein Differenzglied (Diff) Differenzen des maximalen Signals mit allen anderen Signalen bildet und hieraus die wenigstens eine Differenz bildet.

2. Verfahren nach Anspruch 1, **dadurch gekennzeichnet, dass** die wenigstens eine Differenz signalverarbeitet wird und die wenigstens eine signalverarbeitete Differenz einem Schwellwertvergleich unterzogen wird, wobei der Crashtyp in Abhängigkeit von dem Schwellwertvergleich bestimmt wird, wobei bei einem Überschreiten des Schwellwerts auf einem Pfahlcrash und bei einem Unterschreiten auf einen Barrierencrash erkannt wird.

3. Verfahren nach Anspruch 2, **dadurch gekennzeichnet, dass** als die Signalverarbeitung eine Integration und/oder eine Relation verwendet wird.

4. Verfahren nach einem der vorhergehenden Ansprüche, **dadurch gekennzeichnet, dass** in Abhängigkeit von dem Crashtyp wenigsten eine Auslöseschwelle eines Seitenaufprallalgorithmus verwendet wird.

5. Verfahren nach einem der vorhergehenden Ansprüche, **dadurch gekennzeichnet, dass** in Abhängigkeit vom Crashtyp eine Anzahl und/oder eine Stärke der Personenschutzmittel festgelegt wird.

6. Steuergerät (SG) zur Ansteuerung von Personenschutzmitteln (PS) bei einem Seitenaufprall für ein Fahrzeug (FZ) mit:

   - wenigstens eine Schnittstelle (IF), die wenigstens zwei Signale (S1, S2) von wenigstens zwei unterschiedlichen Sensoren (S1, S2) an unterschiedlichen Einbauorten im Fahrzeug (FZ) bereitstellt.
   - einer Auswerteschaltung ($\mu$C), die ein Crashtypbestimmungsmodul (CT), das in Abhängigkeit von den wenigstens zwei Signalen einen Crashtyp bestimmt und die ein Ansteuerungsmodul (AN) aufweist, das in Abhängigkeit von dem Crashtyp die Personenschutzmittel (PS) ansteuert, **dadurch gekennzeichnet, dass** das Crashtypbestimmungsmodul (CT) wenigstens ein Differenzglied (Diff) zur Bildung wenigstens einer Differenz (Diff, 1, 2) der wenigstens zwei Signale (S1, S2) aufweist, wobei es das Crashtypbestimmungsmodul (CT) den Crashtyp in Abhängigkeit von der Differenz bestimmt, wobei das Crashtypbestimmungsmodul (CT) einen Maximumsucher aufweist, der das jeweilige maximale Signal bestimmt, wobei das wenigstens eine Differenzglied (Diff) Differenzen des jeweiligen maximalen Signals mit allen anderen Signalen bildet.

7. Steuergerät nach Anspruch 6, **dadurch gekennzeichnet, dass** das Crashtypbestimmungsmodul (CT) eine Signalverarbeitung (I) für die Differenz (Diff, 1, 2) aufweist und dass der Signalverarbeitung (I) ein Schwellwertvergleicher (S) nachgeschaltet ist, wobei ein Schwellwert des Schwellwertvergleichers (S) derart festgelegt ist, dass dieser Schwellwert bei einem Barrierencrash nicht erreicht wird.

8. Steuergerät nach Anspruch 7, **dadurch gekennzeichnet, dass** die Signalverarbeitung wenigstens einen Integrator (I) oder ein Glied zur Relationsbildung aufweist.

## Claims

1. Method for actuating personal safety means (PS) in the case of a side impact for a vehicle (FZ), wherein the actuation takes place as a function of a determination of crash type, wherein the crash type is determined by means of at least two signals (S1 to S4) of differently installed sensors (S1 to S4), wherein the determination takes place as a function of at least one difference between the at least two signals (S1, S2), **characterized in that** a maximum signal is determined by means of a maximum searcher, and at least one differentiating element (Diff) forms differences between the maximum signal and all the other signals, and forms the at least one difference therefrom.

2. Method according to Claim 1, **characterized in that** the at least one difference is signal-processed and the at least one signal-processed difference is subjected to a threshold value comparison, wherein the crash type is determined as a function of the threshold value comparison, wherein a crash with a pole is detected in the case of the threshold value being exceeded, and a crash with a barrier is detected in the case of said threshold value being undershot.

3. Method according to Claim 2, **characterized in that** an integration and/or a relation are/is used as the signal processing.

4. Method according to one of the preceding claims, **characterized in that** at least one triggering threshold of a side impact algorithm is used as a function of the crash type.

5. Method according to one of the preceding claims, **characterized in that** a number and/or a strength of the personal safety means are/is defined as a function of the crash type.

6. Control unit (SG) for actuating personal safety means (PS) in the case of a side impact for a vehicle (FZ), having:

   - at least one interface (IF) which makes available at least two signals (S1, S2) from at least two different sensors (S1, S2) at different installation locations in the vehicle (FZ),
   - an evaluation circuit ($\mu$C) which has a crash type-determining module (CT) which determines a crash type as a function of the at least two signals, and which has an actuation module (AN) which actuates the personal safety means (PS) as a function of the crash type, **characterized in that** the crash type-determining module (CT) has at least one differentiating element (Diff) for forming at least one difference (Diff, 1, 2) between the at least two signals (S1, S2), wherein it the crash type-determining module (CT) determines the crash type as a function of the difference, wherein the crash type-determining module (CT) has a maximum searcher which determines the respective maximum signal, wherein the at least one differentiating element (Diff) forms differences between the respective maximum signal and all the other signals.

7. Control unit according to Claim 6, **characterized in that** the crash type-determining module (CT) has a signal processing means (I) for the difference (Diff, 1, 2), and **in that** a threshold value comparator (S) is connected downstream of the signal processing means (I), wherein a threshold value of the threshold value comparator (S) is defined in such a way that this threshold value is not reached in the case of a crash with a barrier.

8. Control unit according to Claim 7, **characterized in that** the signal processing means has at least one integrator (I) or an element for forming relations.

## Revendications

1. Procédé de commande de moyens de protection des personnes (PS) lors d'un impact latéral pour un véhicule (FZ), la commande s'effectuant en fonction d'une détermination du type de collision, le type de collision étant déterminé au moyen d'au moins deux signaux (S1 à S4) de capteurs (S1 à S4) installés différemment, la détermination s'effectuant en fonction d'au moins une différence entre les au moins deux signaux (S1, S2),
   **caractérisé en ce que**
   un signal maximal est déterminé au moyen d'un circuit de recherche de maximum et au moins un circuit de différentiation (Diff) calcule les différences entre le signal maximal et tous les autres signaux et calcule l'au moins une différence à partir de celles-ci.

2. Procédé selon la revendication 1, **caractérisé en ce que** l'au moins une différence est soumise à un traitement de signal et l'au moins une différence ayant fait l'objet d'un traitement de signal est soumise à une comparaison avec une valeur de seuil, le type de collision étant déterminé en fonction de la comparaison avec une valeur de seuil, une collision avec un poteau étant reconnue dans le cas d'un franchissement vers le haut de la valeur de seuil et une collision avec une barrière dans le cas d'un franchissement vers le bas de la valeur de seuil.

3. Procédé selon la revendication 2, **caractérisé en ce que** le traitement de signal utilisé est une intégration et/ou une relation.

4. Procédé selon l'une des revendications précédentes, **caractérisé en ce qu'**au moins un seuil de déclenchement d'un algorithme d'impact latéral est utilisé en fonction du type de collision.

5. Procédé selon l'une des revendications précédentes, **caractérisé en ce qu'**un nombre et/ou une intensité des moyens de protection des personnes sont définis en fonction du type de collision.

6. Contrôleur (SG) destiné à commander des moyens de protection des personnes (PS) lors d'un impact latéral pour un véhicule (FZ), comprenant :

   - au moins une interface (IF) qui délivre au moins deux signaux (S1, S2) d'au moins deux capteurs (S1, S2) différents à des emplacements d'installation différents dans le véhicule (FZ),
   - un circuit d'interprétation (μC), qui possède un module de détermination de type de collision (CT), lequel détermine un type de collision en fonction des au moins deux signaux, et un module de commande (AN), lequel commande les moyens de protection des personnes (PS) en fonction du type de collision,

   **caractérisé en ce que**
   le module de détermination de type de collision (CT) possède au moins un circuit de différentiation (Diff) destiné à calculer au moins une différence (Diff, 1, 2) des au moins deux signaux (S1, S2), le module de détermination de collision (CT) le déterminant le type de collision en fonction de la différence, le module de détermination de type de collision (CT) possédant un circuit de recherche du maximum qui détermine respectivement le signal maximal, l'au moins un circuit de différentiation (Diff) calculant les différences entre le signal maximal respectif et tous les autres signaux.

7. Contrôleur selon la revendication 6, **caractérisé en ce que** le module de détermination de type de collision (CT) possède un circuit de traitement de signal (I) pour la différence (Diff, 1, 2) et **en ce qu'**un comparateur de valeur de seuil (S) est branché en aval du circuit de traitement de signal (I), une valeur de seuil du comparateur de valeur de seuil (S) étant fixée de telle sorte que cette valeur de seuil n'est pas atteinte lors d'une collision avec une barrière.

8. Contrôleur selon la revendication 7, **caractérisé en**

ce que le circuit de traitement de signal possède au moins un intégrateur (I) ou un élément servant à la formation de relations.

**Fig. 1**

**Fig. 2**

S1 →
S2 →
S3 →
S4 →

CTB

301

S1 →
S2 →
S3 →
S4 →

AN →

300

**Fig. 3**

**Fig. 4**

FZ

40

3  2  1

4

**Fig. 5**

FZ

50

3  2  1

4

Fig. 6

Fig. 7

Fig. 8

Fig. 9

```
┌─────────────────────────┐
│                         │
│      S1, S2, S3, S4      │─────────────────────┐
│                         │          100         │
└─────────────────────────┘                      │
            │                                     │
            ▼                                     │
┌─────────────────────────┐                      │
│                         │                      │
│    Max (S1, S2, S3, S4)  │          101         │
│                         │                      │
└─────────────────────────┘                      │
            │                                     │
            ▼                                     │
┌─────────────────────────┐                      │
│                         │                      │
│                         │          102         │
│                         │                      │
└─────────────────────────┘                      │
            │                                     │
            ▼                                     │
┌─────────────────────────┐                      │
│                         │                      │
│                         │          103         │
│                         │                      │
└─────────────────────────┘                      │
            │                                     │
            ▼                                     │
┌─────────────────────────┐                      │
│                         │                      │
│                         │          104         │
│                         │                      │
└─────────────────────────┘                      ▼
            │                                 ┌──────────┐
            ▼                       105       │   106    │
┌─────────────────────────┐                   │          │
│                         │──────────────────▶│          │
│                         │                   │          │
│                         │                   └──────────┘
└─────────────────────────┘
```

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6095553 A

- WO 02058968 A